# EUROPEAN PATENT APPLICATION

(11) **EP 2 277 809 A1**
(43) Date of publication of application: **26.01.2011**
(21) Application number: 10170321.3
(22) Date of filing: 21.07.2010
(51) Int. Cl.: B65G 47/244, A21C 9/08

(54) **Spacing and alignment device, particularly for production and processing lines of rolled food products**

(30) Priority: 24.07.2009 IT VR20090113
(71) Applicant: RONDO SCHIO S.R.L., 36015 SCHIO (VI) (IT)
(72) Inventor: Scalzeri, Andrea, 36010, ROANA VI (IT)
(74) Representative: Modiano, Micaela Nadia

(57) **Abstract**

A spacing and alignment device (1), particularly for cut pieces of dough (6), comprising a supporting frame (2), associated with a line (3) for the conveyance of at least one continuous band (100) of dough, for means for cutting the continuous band (100) of dough into pieces of dough (6) and comprising at least one supporting structure (7) for at least one handling element (8), which is kinematically connected to an actuation device, the handling element (8) being movable along an actuation direction that is substantially perpendicular to the plane of arrangement of the cut pieces of dough (6) in order to pass from a disengagement condition, in which the handling element (8) is spaced from the cut pieces of dough (6), to an engagement condition, in which the handling element (8) engages at least one portion of a respective cut piece of dough (6), means for moving the handling element (8) being provided which are adapted to rotate the handling element (8), at least in the engagement condition, about a rotation axis that is substantially parallel to the actuation direction, the rotation axis being eccentric with respect to the respective handling element (8).

## Description

The present invention relates to a spacing and alignment device for cut pieces of dough, which is particularly adapted to be used on production and processing lines of rolled food products.

Nowadays, production lines of rolled food products, such as croissants, are typically constituted by a device for producing a band of dough that is then fed to a conveyor belt.

Positioned along the conveyor belt, there is generally a first cutting device which cuts and separates the continuous band of dough into strips of a determined width which is a function of the dimensions and geometric characteristics of the end product.

Downstream the first cutting device there is a second cutting device that is adapted to divide the respective strips of dough into triangular dough shapes.

Downstream this device there is a device for spacing and aligning the triangular dough shapes, which orients the triangular dough shapes in such a way that their bases are facing towards the direction of travel of the conveyor belt used to move such shapes.

The spacing and alignment device can be, for example, provided by using an element for supporting a plurality of assemblies of handling elements, each of which is constituted by a series of handling elements that are moved by a chain along a closed curvilinear trajectory and which have at least one section of engagement facing the conveyor belt upon which the shapes, which are spaced out from each other and are yet to be turned around, travel.

When the handling elements, moved by the chain, proceed along the section of engagement, they engage with the upper surface of the shapes and, by means of a mechanism usually of the cam type, they turn in a clockwise or anticlockwise direction through an angle of 90°, dragging the respective shape with them in rotation so that, at the end of the section of engagement, its base is facing towards the direction of travel of the conveyor belt.

For the purposes of example, spacing and alignment devices of this type are disclosed in US 5,409,721.

Alternatively spacing and alignment devices have been proposed that are constituted by a disc-shaped element which faces the conveyor belt upon which the shapes to be turned around are moved.

In this case, the spacing and alignment device has gripping elements for the shapes to be turned around, which are arranged at a perimetric area of such disc-shaped element and on its side facing towards the conveyor belt.

The disc-shaped element is made to rotate about an axis that is substantially perpendicular to its plane of arrangement and, therefore, to the plane of arrangement of the conveyed shapes, thus dragging such shapes with it in rotation. Such a device is described, for example, in DE 41 00 945 A1.

Finally, EP1709872 B1, in the name of this same applicant, discloses a spacing and alignment device that is provided with a supporting structure for at least one handling element, which is kinematically connected to an actuation device that is movable along an actuation direction that is substantially perpendicular to the plane of the pieces of dough so as to go from a disengagement condition, in which it is spaced from the pieces of dough, to an engagement condition, in which the handling element engages with at least one portion of a respective piece of dough. Specifically, there are means for moving the handling element which are adapted to rotate such handling element, when it is brought into the engagement condition, about an axis of rotation that is substantially parallel to the actuation direction.

Although the devices described above are widely used nowadays, they are not without drawbacks.

First and foremost, such devices are in fact often difficult to synchronise as well as being, obviously, structurally very complex.

A further drawback of the devices used nowadays is the impossibility of directly intervening on the device to make it operate correctly with varying numbers, dimensions, and spaces between the bands of dough.

In such case, in fact, currently it is necessary to intervene on the line and completely replace all of the supporting structure associated with the relative assemblies of handling elements.

Moreover, it has been observed that the spacing and alignment devices sold today have a limited speed which is imposed, substantially, by the limits of the purely mechanical movements of the handling elements.

Finally, it has been found that in many situations it may be extremely important, in order to increase the productivity of the system, to be able to take full advantage of the transversal width of the line which, owing to the particular shape of the triangles, is completely occupied before the rotation of the shapes but, once the shapes have been rotated, such shapes are transversally extremely spaced out from each other.

In certain situations, to increase the quantity of rolled products per time unit, some producers have increased the transversal width of the line but this solution is apparently in contrast with the need to maintain, in any case, reduced encumbrances.

The aim of the present invention is to eliminate, or at least to drastically reduce, the above mentioned drawbacks of known types of spacing and alignment device.

Within this aim, an object of the present invention is to provide a spacing and alignment device that makes it possible to optimise the positioning of the shapes along the production line, increasing consequently the speed and productivity of the overall system.

Another object of the present invention is to enable, in a short time and with a limited number of operations, the correct functioning of the device as the number of bands of dough to be processed varies, and as the dimensions of the products to be aligned vary.

A further object of the present invention is to provide a spacing and alignment device that is reliable.

Another object of the invention is to provide a spacing and alignment device that can be made at low cost, so that its use is advantageous also from an economic viewpoint.

This aim, as well as these and other objects which will become better apparent hereinafter are achieved by a spacing and alignment device, particularly for cut pieces of dough, comprising a supporting frame, associated with a line for the conveyance of at least one continuous band of dough, for means for cutting the continuous band of dough into pieces of dough and comprising at least one supporting structure for at least one handling element, which is kinematically connected to an actuation device, said handling element being movable along an actuation direction that is substantially perpendicular to the plane of arrangement of the cut pieces of dough in order to pass from a disengagement condition, in which the handling element is spaced from the cut pieces of dough, to an engagement condition, in which the handling element engages at least one portion of a respective cut piece of dough, means for moving the handling element being provided which are adapted to rotate the handling element, at least in said engagement condition, about a rotation axis that is substantially parallel to said actuation direction, **characterized in that** the rotation axis is eccentric with respect to the respective handling element.

Further characteristics and advantages of the invention will become better apparent from the following detailed description of some preferred, but not exclusive, embodiments of a spacing and alignment device according to the invention, illustrated by way of non-limiting examples in the accompanying drawings, wherein:
Figure 1 is a top view of a portion of a production and processing line of rolled food products which is associated with a spacing and alignment device according to the invention in which, for greater clarity, the supporting structure of the handling elements is not shown;
Figure 2 is a view similar to Figure 1 in which the handling elements are in the engagement condition and rotating about their rotation axis;
Figure 3 is a top sectional view of a body comprising two handling elements;

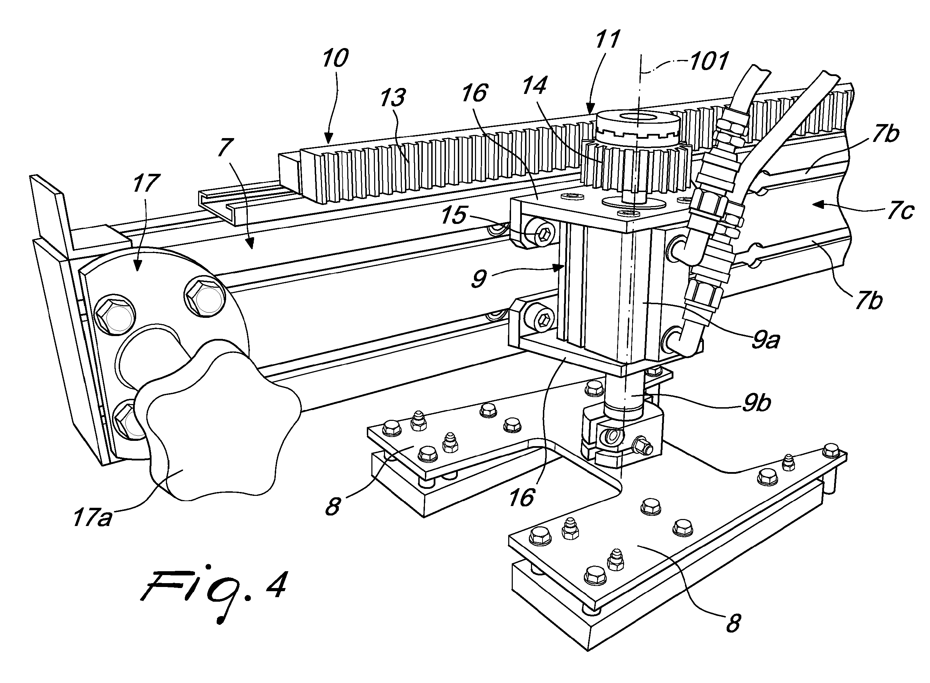

Figure 4 is a perspective view of a supporting structure associated with an actuation device associated with two handling elements;

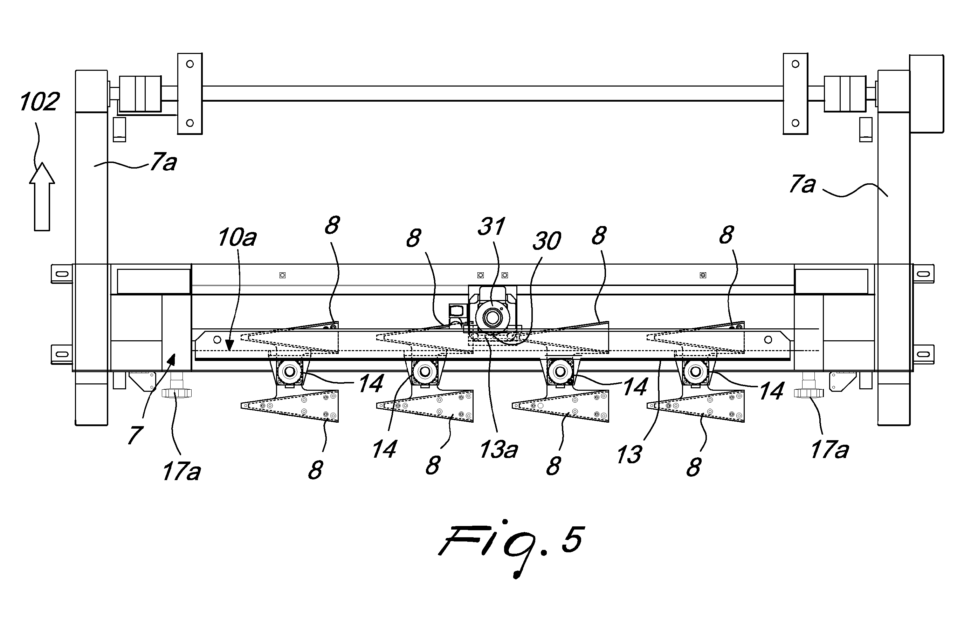

Figure 5 is a top view, partially in phantom lines, of the supporting structure of the handling elements.

In the embodiments that follow, individual characteristics shown in relation to specific examples may in reality be interchanged with other, different characteristics, existing in other embodiments.

Moreover, it should be noted that anything found to be already known during the patenting process is understood not to be claimed and to be the subject of a disclaimer.

With reference to the figures, a spacing and alignment device, particularly for cut pieces of dough, generally designated by the reference numeral 1, comprises a supporting frame 2, associated with a line 3 for the conveyance of at least one continuous band of dough.

The conveyance line 3 is associated with means for cutting a continuous band, or more usually bands, 100 of dough into cut pieces of dough 6.

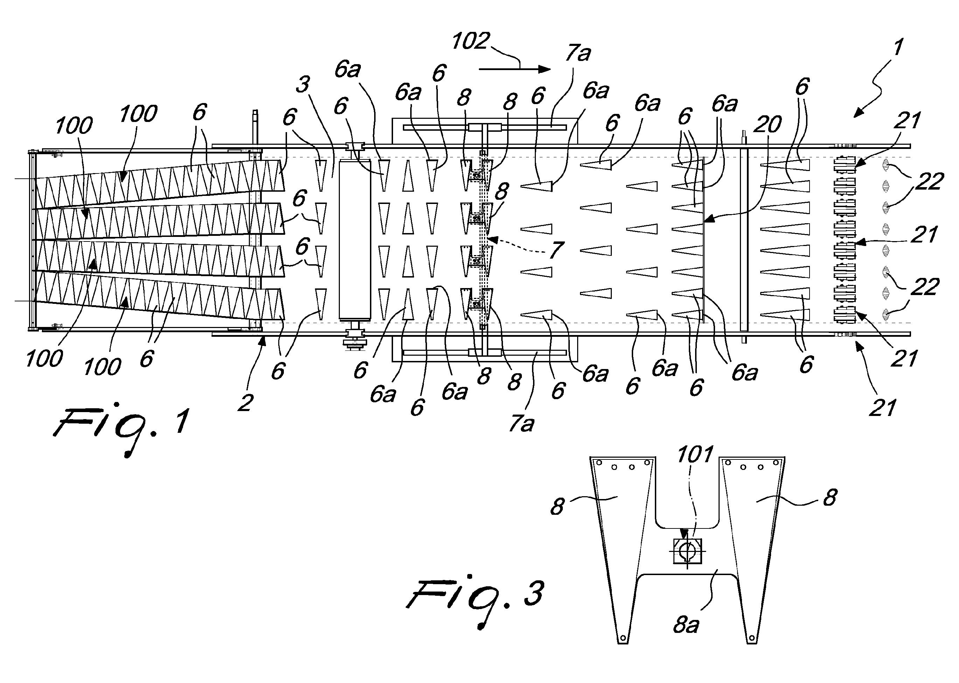

In particular, as shown in the top view of Figure 1, the means of cutting, which are not shown, cut each of the continuous bands 100 into cut pieces of dough 6 which have an isosceles triangular shape. The bases 6a of each shape are arranged, alternately, at the sides of the respective band 100 of dough.

Obviously, there is nothing to prevent the cut pieces of dough 6 from having differently shaped outlines (for example rhomboid, trapezoid, rectangular etc.).

According to the present invention, the spacing and alignment device 1 has a supporting structure 7 for at least one handling element 8.

The (or each) handling element 8 is kinematically connected to an actuation device 9 in such a way as to be movable along an actuation direction that is substantially perpendicular to the plane of arrangement of the cut pieces of dough 6 in order to pass from a disengagement condition, in which the (or each) handling element 8 is spaced from the respective cut piece of dough 6, to an engagement condition in which the handling element(s) 8 engage(s) with at least one portion of a respective cut piece of dough 6.

The spacing and alignment device 1 is provided, moreover, with means 10 for moving the handling element 8 which are adapted to determine the rotation of the handling element 8, at least when it is in the engagement condition, about a respective rotation axis 101 that is substantially parallel to the actuation direction.

According to the present invention, the rotation axis 101 is eccentric with respect to the respective handling element 8.

According to a preferred embodiment, the supporting structure 7 can move, with respect to the supporting frame 2, with a back-and-forth motion along the direction of movement 102 of the conveyance line 2.

In particular, it is possible to provide for the supporting structure 7, or at least a portion thereof which is integral with the handling elements 8, to be slideably coupled, for example by means of the interposition of one or more rectilinear guides 7a, to the supporting frame 2 and, at the same time, kinematically connected to a movement body, not shown in the figures, which is adapted to move, with a back-and-forth motion, along the direction of movement 102, the supporting structure 7 and, therefore, the (or each) handling element 8 that is supported by it.

Advantageously, the rotation axis 101 is arranged outside the bulk of the handling element but, obviously, the distance between the centre of the handling element 8 and the rotation axis 101 can vary depending on how far it is desired to transversally move the cut pieces of dough 6.

According to a preferred embodiment, which is *inter alia* shown in the figures, the actuation device 9 is kinematically connected to two handling elements 8 which are arranged on opposite sides with respect to the respective rotation axis 101.

Advantageously, when the handling element(s) 8 is (are) in a condition of engagement with the respective cut piece of dough 6, the supporting structure 7 has a direction of movement that matches the advancement direction 102 of the cut pieces of dough 6 that are engaged with the respective handling element 8 and, advisably, a speed that substantially corresponds to the advancement speed of the cut piece of dough 6. In this way, the relative speed between the cut piece 6 and the handling element 8 that is engaged with it is equal to zero.

In more specific detail, the actuation device comprises a linear actuator in which the body of the actuator 9a is jointly connected to the supporting structure 7 and the stem 9b is jointly connected in rotation to a respective handling element 8.

Advantageously, the supporting structure 7 is associated with at least one guiding element 10a which can move with an alternating back-and-forth motion.

Between the guiding element 10a and the handling element (or handling elements) 8 there are kinematic connection means 11 that are adapted to transform the alternating back-and-forth motion of the guiding element 10 into a rotary motion of the, or of each, handling element 8 about the respective rotation axis 101.

According to a preferred embodiment, the stem 9b of each linear actuator 9 is rotatably supported, by means of, for example, interposing bearings, by the respective body of the actuator 9a about its own longitudinal direction and, therefore, about the rotation axis 101 of the respective handling element 8.

In this case, it is advisable to have the kinematic connection means 11 act between the guiding element 10a and the (or each) stem 9b.

In this regard, the guiding element l0a can be constituted by a rack 13 while the kinematic connection means 11 can comprise a pinion 14 that rotates jointly with a respective stem 9b and which meshes with the rack 13.

As can clearly be seen in the top view of Figure 1, the supporting structure 7 is typically associated with a plurality of bodies of the actuator 9a which have a respective stem 9b that is jointly connected to a respective supporting body 8a at the end of which the handling element(s) 8 is (are) connected.

On the other side of the stem 9b there is a respective pinion 14 that meshes with the rack 13.

The guiding element 10a can have, on the opposite side with respect to the rack 13, a toothed section that meshes with a movement wheel 30 which is actuated in rotation by a motor 31.

In practice, in this way it is possible to independently adjust the speed and the stroke travel of the back-and-forth motion of the supporting structure 7 along the direction 102 and the rotation about the axis of rotation 101 of the handling element 8.

According to a further important aspect of the invention, the bodies of the actuator 9a, and the handling elements 8 in general, can be removably fixed to the supporting structure 7.

In this regard, it is possible to provide longitudinal grooves 7b, defined on a crosspiece 7c borne by the supporting structure 7, which can be slideably engaged by locking stops that can be tightened, by means of socket head screws 15, to supporting brackets 16 of the body of the actuator 9a.

In this way it is possible to have, along the crosspiece 7c, at the desired distance, an adequate number of handling elements 8 for the various different operating modes of the production line.

It is also possible to provide removable means 17 for anchoring the crosspiece 7c to the supporting structure 7 which are constituted, for example, by a pair of end grips 17a that support a threaded stem.

The operation of the spacing and alignment device 1 according to the present invention is evident from the foregoing description.

In practice, the linear actuators 9, controlled by a pneumatic circuit, bring the respective handling elements 8 into a condition of engagement with the cut piece of dough 6 advancing along the line. At the same time, actuation means control the supporting structure 7 so as to move it along the rectilinear guide 7a thus ensuring, during the phase of engaging the handling elements 8 with the cut pieces of dough 6, the same direction and the same speed of the handling elements 8 and of the respective cut pieces of dough 6 engaged by them.

In such condition, the rack 13, actuated by the motor 31, moves along a direction that is parallel to the longitudinal direction of the crosspiece 7c, thus causing the stems 9b and the handling elements 8 associated with them to rotate, with the consequent rotation of the cut pieces of dough 6.

During the rotation, typically through 90°, the cut pieces of dough 6 also move transversally with respect to the longitudinal direction of the line 3 owing to the fact that the rotation axis 101 is eccentric with respect to the handling element 8.

Once the rotation of the cut pieces of dough 6 has concluded, the supporting structure 7 is moved, again along the rectilinear guide 7a, but in the opposite direction with respect to the direction of advancement of the cut pieces of dough 6 and, at the same time, the linear actuators 9 bring the handling elements 8 into a condition of disengagement.

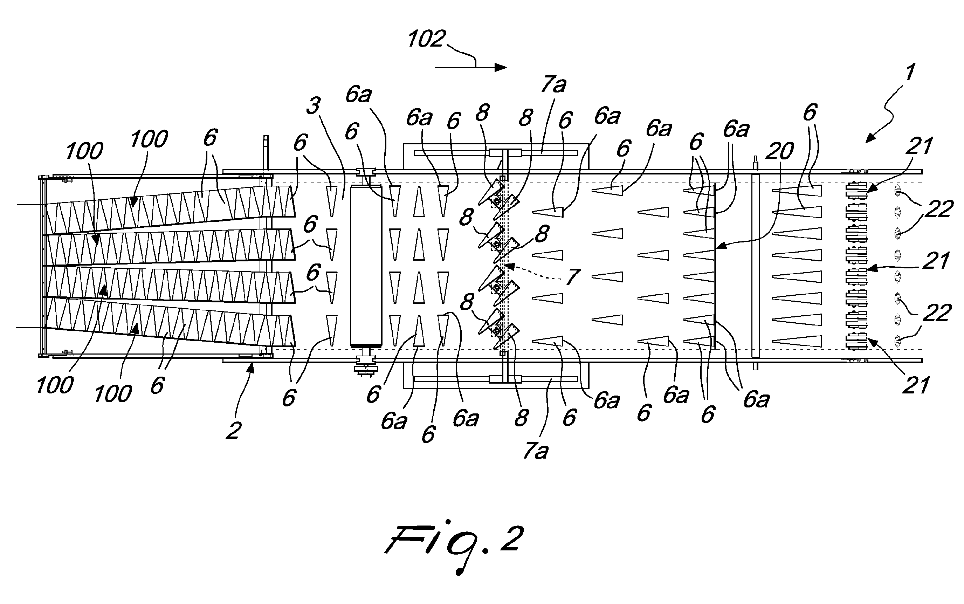

The rack 13, by keeping its direction of advancement constant, brings the respective handling element 8 in rotation with it in order to ensure an adequate engagement of the handling elements 8 with the cut pieces of dough 6 that are immediately upstream because, as can clearly be seen in Figures 1 and 2, the cut pieces of dough that immediately succeed each other have their bases 6c arranged in opposite directions.

The speed of the rack 13 and, obviously, of the supporting structure 7 is synchronised according to the advancement speed of the cut pieces of dough 6 so as to ensure that, once it has returned to its initial condition, it can engage immediately with the cut piece of dough 6 that is immediately upstream with respect to the one that was previously rotated.

The rotation of the cut pieces of dough 6 arranged immediately downstream is performed in such a way as to move them transversally from the opposite side of the rotation axis 101 with respect to those rotated previously, so that the successively rotated cut pieces of dough 6 will be mutually staggered in the transversal direction.

For example, such condition can be achieved by inverting the direction of rotation of the stem 9b about the rotation axis 101.

The rotated cut pieces of dough 6, before being rolled up by the rolling devices 21 to obtain the rolled shapes 22, finally pass through an alignment station 20 that is constituted, for example, by an aligning bar.

In the alignment station 20, basically the dough shapes 6 are stopped at the base 6a so that they are reached by the cut pieces of dough 6 that are immediately upstream and staggered with respect to them.

Once the bases 6a of two or more successive rows of cut pieces of dough are aligned, the alignment station 20 disengages from the cut pieces of dough 6 and allows them to be brought towards the alignment devices 21.

For the purposes of example, if the alignment station 20 is constituted by an aligning bar, then such bar is adapted, on command, to move from a condition of engagement, in which it moves to a position that is adjacent to the conveyor belt so as to block the advancement of the cut pieces of dough 6, to a condition of disengagement, in which it is spaced from the conveyor belt so as to allow the advancement of the cut pieces of dough 6.

All the characteristics of the invention, indicated above as advantageous, advisable or similar, may also be missing or be substituted by equivalent characteristics.

The invention thus conceived is susceptible of numerous modifications and variations, all of which are within the scope of the appended claims.

In particular, it is evident how it is possible to obtain, simply and effectively, an appreciable increase in the quantity of rolled cut pieces of dough 6 per unit of time by occupying the entire transversal width of the line 3.

In this regard, it has been found that the spacing and alignment device 1 makes it possible to process an extremely high number of shapes by assigning anyway to the rolling phase a period of time that is sufficient to correctly perform the rolling and by speeding up the upstream operations (rotation) which are far less problematic.

In practice it has been found that in all the embodiments the invention has fully achieved the aim and objects.

In practice the materials employed, as well as the dimensions, may be any according to requirements.

Moreover, all the details can be substituted by other technically equivalent elements.

The disclosures in Italian Patent Application No. VR2009A000113 from which this application claims priority are incorporated herein by reference.

Where the technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A spacing and alignment device (1), particularly for cut pieces of dough, comprising a supporting frame (2), associated with a line (3) for the conveyance of at least one continuous band (100) of dough, for means for cutting said continuous band (100) of dough into pieces of dough (6) and comprising at least one supporting structure (7) for at least one handling element (8), which is kinematically connected to an actuation device, said handling element (8) being movable along an actuation direction that is substantially perpendicular to the plane of arrangement of said cut pieces of dough (6) in order to pass from a disengagement condition, in which said handling element (8) is spaced from said cut pieces of dough (6), to an engagement condition, in which said handling element (8) engages at least one portion of a respective cut piece of dough (6), means for moving said handling element being provided which are adapted to rotate said handling element (8), at least in said engagement condition, about a rotation axis that is substantially parallel to said actuation direction, **characterized in that** said rotation axis is eccentric with respect to the respective handling element (8).

2. The spacing and alignment device (1) according to claim 1, **characterized in that** said handling element, in the engagement condition, is adapted to move the respective cut piece of dough transversely to the direction of motion of said conveyance line.

3. The spacing and alignment device (1) according to one or more of the preceding claims, **characterized in that** said rotation axis is arranged externally with respect to said handling element.

4. The spacing and alignment device (1) according to one or more of the preceding claims, **characterized in that** said actuation device is connected kinematically to two handling elements arranged on opposite sides with respect to the respective rotation axis.

5. The spacing and alignment device (1) according to one or more of the preceding claims, **characterized in that** said supporting structure (7) can move with a back-and-forth motion along the direction of motion of said conveyance line (3), with said handling element (8) in the engagement condition said supporting structure (7) having a direction that matches the advancement direction of said cut piece of dough (6) engaged with said handling element (8) and having a speed that substantially corresponds to the advancement speed of said cut piece of dough (6).

6. The spacing and alignment device (1) according to one or more of the preceding claims, **characterized in that** said actuation device comprises a linear actuator (9), in which the body of the actuator (9a) is jointly connected to said supporting structure (7) and the stem (9b) is jointly connected to a respective handling element (8).

7. The spacing and alignment device (1) according to one or more of the preceding claims, **characterized in that** said supporting structure (7) is associated with at least one guiding element (10), which can move with an alternating back-and-forth motion, means (11) being provided for kinematic connection between said at least one guiding element (10) and said at least one handling element (8), which are adapted to convert said alternating back-and-forth motion into a rotary motion of said at least one handling element (8) about the rotation axis of said handling element (8).

8. The spacing and alignment device (1) according to one or more of the preceding claims, **characterized in that** said stem (9b) is supported rotatably by said body of the actuator (9a) about its own longitudinal direction, said kinematic connection means (11) acting between said guiding element (10) and said at least one stem (9b).

9. The spacing and alignment device (1) according to one or more of the preceding claims, **characterized in that** said guiding element (10) comprises a rack (13) and said kinematic connection means (11) comprise a pinion (14) that rotates jointly with a respective stem (9b) and meshes with said rack (13).

10. The spacing and alignment device (1) according to one or more of the preceding claims, **characterized in that** said supporting structure (7) is associated with a plurality of bodies of the actuator (9a) which have a respective stem (9b) that is jointly connected to a respective handling element (8) and to a respective pinion (14) that meshes with said rack (13).

11. The spacing and alignment device (1) according to one or more of the preceding claims, **characterized in that** it comprises means for the detachable fixing of said handling elements (8) to said supporting structure (7).

12. The spacing and alignment device (1) according to one or more of the preceding claims, **characterized in that** said detachable fixing means act between said supporting structure (7) and said bodies of the actuator (9a).

13. The spacing and alignment device (1) according to one or more of the preceding claims, **characterized in that** it comprises an alignment station (20), which is arranged between said handling elements (8) and a rolling station (21) designed to stop said advancing pieces of dough (6) so that they are reached by the pieces of dough (6) that lie directly upstream and are staggered.
